# EUROPEAN PATENT SPECIFICATION

(11) **EP 2 181 832 B1**
(45) Date of publication and mention of the grant of the patent: **27.06.2012**
(21) Application number: 08397523.5
(22) Date of filing: 29.10.2008
(51) Int. Cl.: B29C 47/02, B23K 9/028, F16L 58/10, B29C 47/04, B29C 35/08, B29C 35/04, B05D 1/26, B05D 3/02

(54) **Method and apparatus for coating pipes and pipe sections**
Verfahren und Vorrichtung zur Beschichtung von Rohren und Rohrabschnitten
Procédé et appareil pour le revêtement de tuyaux et de sections de tuyaux

(43) Date of publication of application: 05.05.2010
(73) Proprietor: Oy KWH Pipe AB, 65101 Vaasa (FI); Borealis AG, 1220 Vienna (AT)
(72) Inventor: Leidén, Leif, 07130 Andersböle (FI); Sjöberg, Sven, 65370 Vasa (FI); Smått, Rauno, 37800 Toijala (FI)
(74) Representative: Sundman, Patrik Christoffer

(56) References cited:
- EP-A- 1 985 909
- WO-A-2005/063465
- WO-A-2007/101818
- WO-A-2008/071773
- US-A- 1 736 911

## Description

The present invention concerns a method according to the preamble of claim 1 for coating a pipe or a pipe section.

According to a method of this kind, a layer of at least one polymer material is applied on the surface of the pipe or pipe section at least along a part of the periphery thereof.

The present invention also comprises an apparatus according to the preamble of claim 16 for applying a polymer coating on the surface of a pipe.

Steel pipes coated with layers of polymers, such as polyethylene or polypropylene, have been used in oil and gas pipelines for a long time. These kinds of pipes are mechanically strong and have good corrosion resistance along the coated part of the pipe. They are generally welded together using the SAW technique (Submerged Arc Welding) to form a pipeline. To facilitate weld-joining of the pipes at the construction site, a length of the pipe is usually left uncoated at both ends at the factory where the polymer coating is otherwise applied on the surface of the pipe.

Field-welded joints, i.e. the joints formed at the construction sites, are sensitive to corrosion. For this reason, a coating layer has to be spread upon the girth weld and on the adjacent, uncoated portions of the pipes so as to completely cover the welded joint and to shield it from moisture and water in the ambience.

A number of ways of producing protective coatings of field-welded joints are known in the art (see e.g. WO 2008/071773). Conventionally, the welded joints are covered in a film of polyethylene film (shrink-sleeve), which can be shrink-wrapped around the joint to cover the weld. This method accounts for about 65 % of the field-joint coatings in case of polyethylene-coated steel pipes. Another option is to provide the girth weld with a cover of urethane or epoxy resins. Such coatings can be sprayed on the pipe using spray guns. Further alternatives are represented by machine taping, surface molten tape, manual taping and injection moulding. Some of these techniques give rise to good coating results but are difficult, if not impossible, to use in field conditions; some fail to give adequate protection against corrosion.

It is an aim of the present invention to eliminate at least a part of the problems related to the prior art and to provide a novel method of coating pipes.

It is another aim of the present invention to provide a novel kind of apparatus for coating pipes.

The present invention is based on the idea of applying at least one polymer material in the form of a melt film or sheet on the surface of the pipe or pipe section from a moving die or nozzle. In particular, the melt polymer film or sheet is applied on the pipe from a die which is mounted on a carriage, which can be moved along the periphery of the pipe or pipe section. Further, in order to enhance adhesion of the polymer material with the outer surface of the pipe or pipe section, a limited area of the surface is heated by induction heating before or simultaneously to the application of the polymer film or sheet.

An apparatus according to the invention comprises
- a movable carriage, which is capable of travelling around the periphery of the pipe or pipe section;
- a flat die connected to a source of a polymer melt and mounted on the moveable carriage for applying a polymer layer in melt form on the surface of a pipe or pipe section; and
- induction heating means placed in front of the die in the propagation direction of the carriage.

Further, the apparatus comprises, in combination with the above features, a levelling means for levelling the melt polymer layer formed on the surface of the pipe or pipe section.

More specifically, the present method is mainly characterized by what is stated in the characterizing part of claim 1.

The apparatus according to the invention is characterized by what is stated in the characterizing part of claim 16.

Considerable advantages are obtained by means of the invention. Thus, the method and apparatus according to the invention can be used for coating field joints of pipelines, but it can also be used for other coating applications, where a layer of polymer material needs to be applied upon the surface of a pipe or a similar substrate. Therefore, the invention can also be used for repairing various polymer coatings. The apparatus is light-weight, operator friendly and easy to use in field conditions. The equipment described below can be moved and operated with a tractor with trailer and a log-lift - all equipment being placed on the trailer. The log-lift can be used for moving a tent for shielding off the coating area and the die and platform from one joint to next. Cooling is mostly not needed, but can be effected with e.g. blowing of air or with a wet cloth. The coated area can be readily repaired, if needed with a portable welding machine.

Importantly, when used for producing a field-joint coating, the result of the present method and apparatus will be as good as a factory coating and the invention is fully operational in field conditions, all weather conditions taken into account. The invention can be used for coating sections of pipes or whole pipes. It can also be used for coating the area surrounding a welded or otherwise accomplished joint between two pipes, as will be discussed below.

The localized induction heating means will remove the need for a separate (stationary) heating stage or station.

By using localized induction heating, it is also possible to reduce the total energy consumption needed for heating of the coating area. A reduction of about 50 to 90 % of the total energy consumption can be achieved in some cases. The localized induction heating unit can further be used both for preheating and for the actual heating of the pipe. Preheating will assist in cross-linking the primer.

With induction heating the preheating temperature will readily be adjusted depending on the outside temperature at the installation site. Thus, at some sites (in warm climate), a temperature of less than 150 °C can be sufficient, whereas in cold climate, temperatures of up to 200 °C may be necessary.

Next the invention will be examined more closely with the aid of a detailed description and with reference to the attached drawings.
Figure 1 shows in side view the structure of a coating device according to one embodiment of the invention, wherein the movable die is arranged on a carriage which is provided with an intermediate container for melt polymer;
Figure 2 shows the same embodiment in perspective view; and
Figure 3a to 3c show the process of extruding a polymer film on the surface with the aid of one embodiment of the present invention, wherein melt polymer film is extruded on the surface of a pipe using a movable die directly connected to an extruder.
The method according to the present invention for coating a pipe or a section of a pipe with a polymer layer generally comprises, in combination, the steps of
   - providing a pipe or a pipe section having an outer surface defining the periphery of the pipe or pipe section;
   - applying on the outer surface of the pipe or pipe section a layer of at least one polymer material in the melt state with a nozzle or die, which is mounted on a carriage capable of travelling along the periphery of the pipe or pipe section; and
   - moving the carriage along at least a part of the periphery during the application of the polymer material to form a layer covering at least a part of the surface of the pipe or pipe section,

According to an embodiment, the method according to the present invention is used for producing a polymer layer having a predetermined breadth or width, whereby the material is applied on the surface of the pipe or pipe section using a flat die having a width of the slit gap essentially corresponding to the predetermined breadth of the layer.

Usually, the predetermined breadth is on the order of 10 to 2500 mm, in particular about 50 to 1000 mm, typically about 100 to 750 mm.

In practice, the melt polymer film applied on the surface of the pipe, or pipe section, is levelled after application. By levelling the polymer material, it is possible to some extent to adjust the thickness of the layer so that it corresponds to a pre-selected thickness of the coating. Importantly, however, by levelling any air pockets between the polymer layer and the coated surface can be removed and a tight and hermetic coating is achieved.
Levelling can be carried out manually or using a separate tool. However, according to a particularly preferred embodiment, the movable carriage is provided with a levelling means, as will be explained below in more detail.

According to a preferred embodiment, the carriage is moved along the periphery of the pipe or pipe section a distance essentially corresponding to a pre-selected length of the polymer coating. It is preferred to have the carriage travel at least 180 degrees and in particular at least 360 degrees along the periphery of the pipe or pipe section to provide a polymer layer covering half or all the outer surface along the periphery. One embodiment allows for several consecutive wrapping layers, e.g. by moving the carriage along a spiral-shaped path along the periphery of the pipe or pipe section to provide a polymer layer. In such a case, it is particularly advantageous to have each following layer partially overlap the proceeding layer whereby a hermetic and tight sealing layer can be produced. For achieving a spiral-shape path, the pipe can be axially transferred during coating.

The polymer film can have any desired dimensions, but typically it has a thickness in the range of 0.01 to 10 mm, preferably about 0.1 to 7 mm, in particular about 0.5 to 5 mm. The breadth of the film is about 1 to 1500 mm, preferably about 5 to 1250 mm, in particular about 10 to 1000 mm. The length is advantageously about ¼ of the periphery to about 20 times the periphery, although this is no limit. In general, for example for covering a field joint/weld about 1 to 10 succeeding layers of partly overlapping polymer films suffices.

The coating may comprise a film of only one polymer material, but it can also be formed of a multilayer structure, where there are films of two or more polymer materials.
At least one of the films can be a foamed polymer. Typically, the surface or skin layer of the coating is composed of a solid polymer layer.

As already indicated above, the polymer material is applied in the form of a melt film. The film is preferably produced with an "extrusion nozzle" or "extrusion die" which is capable of forming a melt polymer material into a polymer film having a breadth essentially corresponding to the pre-selected breadth of the coating layer. Any die, such as a flat die, capable of producing a melt film or sheet of the polymer material used, can be applied and is included in the definition of "extrusion die" and "extrusion nozzle". I.e. said term is to be construed to stand for any die or nozzle capable of forming a film from the feed of a polymer melt. Naturally, multilayer film dies or nozzles can also be used.

As known in the art, the cross-section of the flow channel at the entrance of a flat die is typically a circle or a rectangle with a small aspect ratio. In the die, this initial cross-section is gradually transformed to a large aspect ratio rectangle required for sheet extrusion. The channel geometry in a flat die is designed so as to provide for uniform velocity at the exit of the die.

The die is connected to at least one source of melt polymer material. This source is typically selected from the group of extruders, heated screw mixers and storage containers. For producing multilayered film, it is possible to connect the die to two or more sources of polymer material.

One typical source of melt polymer is a conventional extruder, where the starting material comprising polymer pellets is heated before feeding with a feed screw to the extrusion tool. It is possible to connect the die to the extruder to provide for direct feed of melt polymer to the die. The extruder can be replaced with a heated screw mixer which can be filled with polymer pellets and where the polymer can be molten. Such a screw mixer can be mounted on the carriage.

In lieu of direct feed, the heated polymer melt can be intermediately stored on the carriage. This intermediate storage can be formed by, for example, a cylinder which is filled with the melt polymer mass and from which it can be pressed out through the die onto the pipe. The cylinder is heated and/or well-insulated, and it can be mounted on the same frame as the die. The cylinder can be heated with electrical resistance heaters placed about the cylinder. For emptying the intermediate storage container it is preferably provided with a piston, which is hydraulically or pneumatically operated, i.e. generally with any pressure means, or it is electrically operated. Instead of a piston, a conveyor screw can be used. According to one preferred embodiment, the intermediate storage container is replaceable as a cartridge, which makes facilitates a change of polymer during operation.

The thickness of the polymer coating can be controlled by adjusting the thickness of the polymer film extruded from the die. The lip distance (thickness of gap) is generally 0.1 to 50 mm, preferably about 1 to 10 mm, in particular about 1.5 to 5 mm. Alternatively, by using a carriage capable of travelling at an adjustable velocity it is also possible to control the thickness of the film extruded from the nozzle by the velocity of the carriage. In that case, the polymer material typically is extruded from a flat die at an essentially constant extrusion rate. Naturally, a combination of the two alternatives can be used.

The velocity of the carriage can be freely regulated. Depending on the thickness of the film and the consumption of the polymer material it is typically in the range of about 0.01 to 20 m/min, for example about 0.1 to 5 m/min, in particular about 0.3 to 2 m/min.

The thickness of the polymer layer - and the adherence of the layer to the pipe or pipe section - is also influenced by the levelling means used for smoothening and flattening out the polymer layer deposited on the surface. The levelling means typically applies a force generally perpendicular to the polymer material. This levelling means can be, for example, a roller or a blade.

In one embodiment, the roller has a central axis and an elastic surface. The surface is adjustable in the direction of the central axis to fit the surface profile of the pipe or pipe section at the part which is to be coated. For that purpose the roller may comprise an integral roller/cylinder or it can be formed by several cylindrical sections of the same or even somewhat different diameters. The elastic surface can be achieved by using silicon or rubbery materials. Generally, the hardness of the elastic surface is about Shore A 10 to 30.

A levelling means in the form of a blade can also be stiff or elastic, preferably elastic.

Generally it is preferred that the surface of the levelling means is capable of following the upper surface of the pipe or pipe section in such a way that it smoothens the polymer layer against the surface tightly. The surface of the levelling means is also adapted to the adhesive properties of the melt polymer to provide for easy release.

According to one particularly preferred embodiment already mentioned above, the levelling means is mounted on the same movable carriage as the extrusion nozzle/flat die. One way of carrying out this embodiment comprises extruding from the flat die a film onto the levelling means and transferring from the levelling means onto the outer surface of the pipe or pipe section. In this case, the levelling means operates as an applicator and it smoothens and levels the film while transferring it against the surface of the pipe or pipe section.

It is, however, possible to spread the polymer film onto the outer surface of the pipe also directly from the flat die, e.g. by non-contact coating (curtain coating), whereby a flat levelling means is used for smoothening the polymer layer deposited on the surface.

In a preferred embodiment, the polymer material is applied on a surface comprising at least partially an uncoated part of a polymer coated steel pipe. The pipe section may comprise the girth weld between two adjacent pipes, which are welded to each other. The girth weld and the adjacent parts of the uncoated steel pipe, including the abutting ends of the polymer coating, are coated for tightly sealing off the girth weld against air, moisture and water.

Other applications of the present method include repair of polymer coatings, coating of generally any polymer pipes and also of materials different from polymers are metals.

According to a preferred embodiment, the movable carriage can be guided for movement around the periphery of the pipe or pipe section with strapping and guiding means. Such means are exemplified below by chains for traction drive, but various belts and wires can also be used. The carriage can, naturally, be pressed against and moved along the periphery also manually or by external support and manipulation structures.

According to a particularly preferred embodiment, the outer surface of the pipe or pipe section is heated immediately before the application of the melt polymer material. Typically, the outer surface is heated to a temperature in the range of 60 to 300 °C, in particular to about 80 to 250 °C before coating.

In the present context, heated "immediately before" means that temperature of the heated area does not significantly drop after heating and before coating. Typically, the temperature is not allowed to drop more than by 20 % from the temperature to which it is heated. According to one preferred embodiment, the temperature is allowed to drop 20 degrees or less, preferably 10 degrees of less, in particular 5 degrees or less.

In all above applications, the pipe or pipe section is coated with at least one thermoplastic polymer, for example one selected from the group consisting of polyolefins, in particular polyethylene and polypropylene, and modified polyolefins. One class of particularly interesting polymers is formed by stand alone polyolefins, disclosed in more detail in our co-pending patent application EP 06010822, titled "Structure comprising Polyolefin Layer or Profile with Enhanced Adhesion", filed 26.5.2006. Such polyolefins comprise adhesion promoting groups, in particular polar groups, e.g. groups selected from the group of acrylates, such as methylacrylates, methylmethacrylates, propylacrylates, butylacrylates, carboxylic acids, such as maleic acid, and amines.

Polyolefins with adhesion promoting, preferably polar, groups may e.g. be prepared by copolymerisation of olefin monomers with comonomer compounds bearing such groups or by grafting of appropriate compounds onto the polyolefin backbone after the polyolefin has been produced. If copolymerisation is used for the production of the polyolefm with adhesion promoting groups, it is preferred that a polar copolymer is produced which comprises a copolymer of ethylene with one or more comonomers selected from C1- to C6-alkyl acrylates, C1- to C6-alkyl methacrylates, hydroxy functional monomers, anhydride functional monomers, e.g. 2-hydroxyethyl (meth-)acrylate, acrylic acids, methacrylic acids, vinyl acetate and vinyl silanes. For example, the polar copolymer may also be a terpolymer of ethylene, one of the above mentioned monomers and a vinyl silane. The copolymer may also contain ionomeric structures (like in e.g. DuPont's Surlyn types).

If grafting is used to obtain the polyolefin with adhesion promoting groups, as grafting agent, any such agent can be used which is known to be suitable for this purpose by the person skilled in the art.

Preferably, the acid grafting agent is an unsaturated carboxylic acid or a derivative thereof such as anhydrides, esters and salts (both metallic or non-metallic). Preferably, the unsaturated group is in conjugation with the carboxylic group. Examples of such grafting agents include vinyl silanes, acrylic acid, methacrylic acid, fumaric acid, maleic acid, nadic acid, citraconic acid, itaconic acid, crotonic acid, and their anhydrides, metal salts, 5 esters amides or imides.

The preferred grafting agents are maleic acid, its derivatives such as maleic acid anhydride, and in particular maleic acid anhydride.

Grafting can be carried out by any process known in the art such as grafting in an melt without a solvent or in solution or dispersion or in a fluidised bed. Preferably, grafting is performed in a heated extruder or mixer as e.g. described in US 3,236,917, US 4,639,495, US 4,950,541 or US 5,194509. Preferably, grafting is carried out in a twin screw extruder such as described in US 15 4,950,541.

Grafting may be carried out in the presence or absence of a radical initiator but is preferably carried out in the presence of a radical initiator such as an organic peroxide, organic perester or organic hydroperoxide.

As mentioned, preferably, the polar groups in the polyolefin are selected from acrylates, e.g. methylacrylates, methylmethacrylates, propylacrylates, butylacrylates, carboxylic acids such as maleic acid and amines.

The base resin is composed of either one type of polyolefin or a mixture of two or more types of polyolefins. Preferably, the polyolefin of the base resin is composed of an ethylene homo- or copolymer and/or a propylene homo- or copolymer or a mixture thereof. The concentration of adhesion promoting groups in the polyolefin is typically from 0.01 to 5.0 mol-%, preferably about 0.02 to 1.0 mol-%, calculated from the total amount of olefin monomers in the polyolefin composition.

The methods, as discussed above, are preferably carried out by first heating the outer surface of the pipe or pipe section. By heating the surface, better adherence of the film to the outer surface can be reached. The temperature is selected depending on the properties of the polymer and on the heating time. Generally, it is not necessary to heat up the surface to the melting temperature of the polymer.

Preferably the pipe surface is heated at a temperature in the range of 60 to 300 °C before coating. The heating of the surface is carried out with a heating means mounted on the carriage. These heating means are preferably mounted before the levelling means and the die in the progression direction of the carriage.

Thus, according to a preferred embodiment, the heating means comprise induction heating means mounted on the carriage. The heating means will provide for locally heating of the surface.

Generally "locally" refers to the fact that merely a limited part of the total area is heated. Preferably the "locally" heated area extends over less than half the perimeter of the pipe or pipe section in the transversal direction of the central axis of the pipe.

The width of the heated area extends only to some extent past the lateral edges of the applied polymer film, typically the portion of the heated area, which extends in a direction which is lateral to the propagation direction of the carriage past the edges of the film, is less than 50 % of the total breadth of the area.

Typically, the locally heated area extends at least essentially along the whole breadth of the polymer layer applied to the outer surface.

According to an embodiment, the locally heated area extends in the propagation direction of the carriage at least 1/ 72 part, preferably at least 1/36 part , in particular at least 1/18 part, suitably about 5 to 50 % of the total periphery of the pipe or pipe section.

The heating means can comprise a heating coil for inductive heating; and a power source for supplying to the heater coil current signals or pulses. The heating coil is inductively coupled to the pipe or pipe section. The coil generates a magnetic flux, based on the current pulse signal, for inductive heating the pipe or pipe section. According to a preferred embodiment, the signal is a current pulse signal with high frequence harmonics.

The induction heating means can be provided with water or non-water cooling.

Examples of suitable heating means capable of achieving locally limited heating effects can be found, for example, in US Patents Nos. 7,034,263, 7,034,264 and 7,279,665.

In the inductor heaters, for example of the above identified kind, the signal generating device can be any convention pulse generator, such as a thyristor, a silicon controlled rectifier or an integrated gate bipolar transistor. The line frequency can be 50 or 60 Hz. Generally, high frequency harmonics in the pulses are preferably maintained - the presence of such harmonics significantly increases the power transferred inductively to the pipe or pipe section.

The pulse generator can be mounted on the carried or, preferably, it is stationary and connected with a cord to the heater unit on the carriage.

Generally the power consumption is moderate - it is generally sufficient to direct energy on the order of 10 W to 100 kW, typically about 100 W to 100 kW to the pipe or pipe section to be locally inductively heated.

The inductively heated area is conventionally, depending on the diameter of the pipe or pipe section, about 10 to 10,000 cm², in particular about 100 to 5,000 cm², typically about 200 to 3,000 cm².

Typically, during heating, the uncoated area of the pipe next to the end (typically about 100 to 500 mm wide on each pipe) as well as a portion of the adjacent polymer coating is heated. The width of the heated area is therefore, depending on the actual pipe, about 200 to 1000 mm, in particular about 250 to 750 mm.

Before the surface is coated, it is possible to modify the surface of the pipe or pipe section by contacting it with a priming agent for improving adherence between the polymer layer and the surface. Naturally, the surface is preferably cleaned before any other treatment. Cleaning can be carried out for instance by shot or grit blasting or by sand blasting.

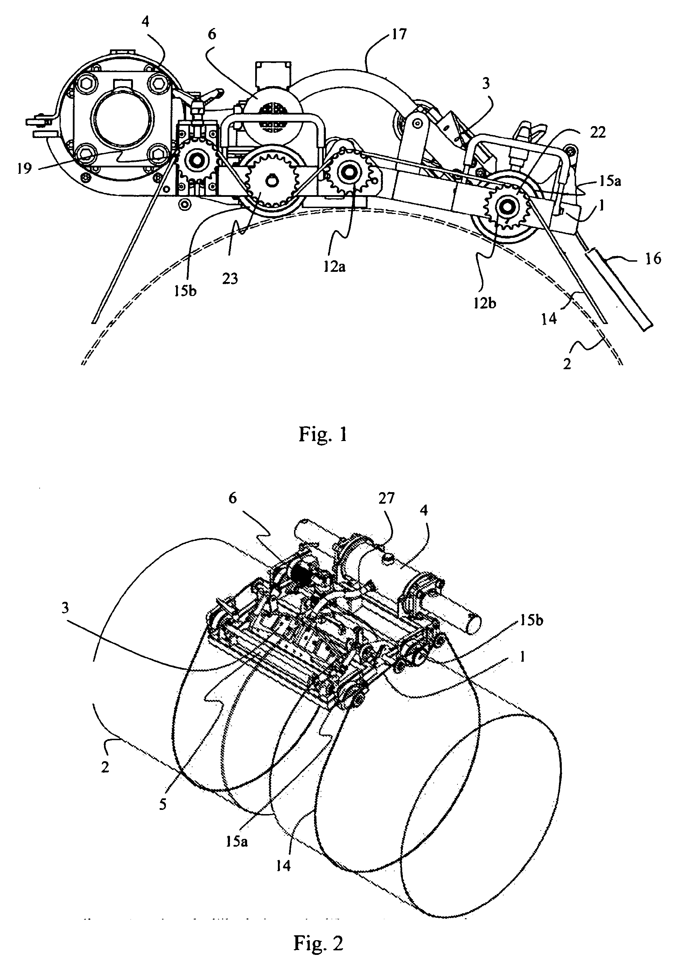

Next, some embodiments of the present invention will be examined more closely with the aid of the attached drawings for illustrating the use of the invention for coating of field-welded joints. In Figures 1 and 2 the following reference numerals are used:
- 1: frame
- 2: pipe
- 3: nozzle assembly
- 4: feed cylinder
- 5: levelling roll
- 6: motor
- 12a, 12b: retaining rings for shaft
- 14: chain
- 15a, 15b: wheels
- 16: inductive heater
- 19: chain tightener
- 22, 23: chain wheels
- 27: pressure hose

As shown in Figures 1 and 2, the present moveable coating device comprises a frame 1 supported upon two sets of wheels 15 for travelling along the surface of a pipe 2. The carriage 1, 15a, 15b is strapped onto the pipe 2 with the aid of at least one chain 14 - in the embodiment according to the drawing, there are two chains - arranged in a loop around the pipe and having a length greater than circumstance of the pipe 2. The traction chain 14 engages chain wheels 22, 23 on the frame, at least some of which are rigidly mounted on the same axis (shaft) as the wheels 15 and kept in place with retaining rings 12a, 12b. A chain tightener 19 is provided for keeping the tension of the chain suitable for keeping the carriage 1, 15a, 15b pressed against the surface.

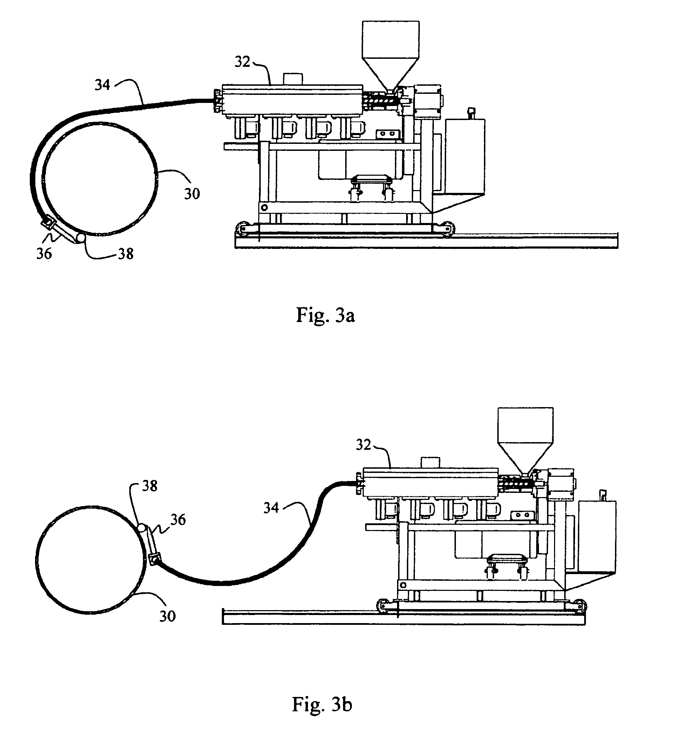

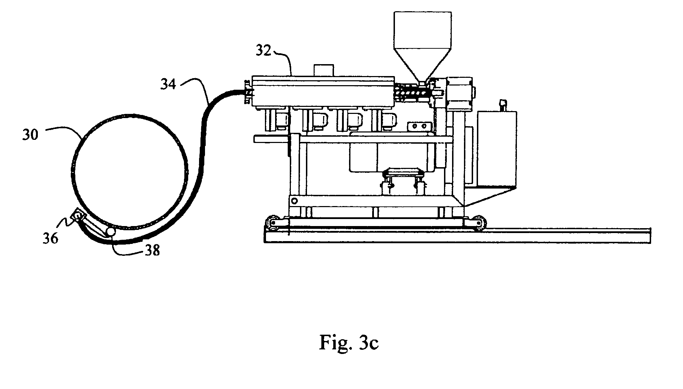

In the moving direction, the carriage 1, 15a, 15b comprises a heating means 16 (not shown in Figure 2) in the form of a induction heater. Next to the heating means there is a flat die 3, which is fed by polymer melt from a cylinder 4, which can be filled with the calculated amount of polymer melt needed for covering a predetermined surface of a pipe. The cylinder 4 and the die 3 are connected with a pressure hose 27. The cylinder is provided with an emptying means, e.g. a piston, which pushes melt polymer out of the cylinder 4 and through the hose 27 to the die 3. As mentioned above, it is also possible to feed melt polymer directly from an extruder into the die, as illustrated in Figures 3a to 3c.

Close to the front wheels 15a, there is an applicator/levelling roll 5, which transfers a polymer film extruded from the die 3 onto the surface of the pipe 2. The roll 5 is stressed with a spring (not shown) so that it presses against the surface of the pipe.

The carriage is driven by an electric motor 6 which is connected to the driving wheels 15a, 15b. Normally, the die travels one lap around the pipe, however, in special cases several laps can be done, depending on desired layer thickness or material combination. During this operation the field-joint will be extruded with molten polymers.

In Figures 1 and 2, the die is fed from an intermediate container mounted on the movable carriage. In one embodiment, a coated steel pipe was coated with a 3 mm thick polyolefin film having a breadth of 500 mm at a velocity of 0.7 m/min with a total polymer consumption of 60 kg/h.

Figure 3a to 3c show the operation of a moving die 36 which is fed directly from an extruder 32 via pressure hose 34. The pipe to be coated is given reference numeral 30 and the applicator roll numeral 38. The figures show how the pipe is coated by the carriage travelling around the pipe.

The coating method according to the invention can be carried out in the following way:

First, the surface of the pipe or pipe section - e.g. a field joint between two polyolefm coated steel pipes - is cleaned. This can be made with abrasive tools, e.g. shot or grit blasting or by sand blasting.

After the cleaning step, the surface is pre-heated. It is possible to utilize the heat from the pipes weld-together operation (pre- and post-heating of weld-zone). However, as indicated above, the carriage is suitably provided with separate heating means, in particular conduction heating means.

Although additional heating conventionally is not needed it can, if so desired, be achieved by IR heaters. Also gas flame heating is possible. Preferably the heating is carried out such that only the surface of the pipe is heated up.

In stationary coating applications, typically in factories and barges, stationary inductive heating can be used in addition, for example for the pre-heating step.

However, as pointed out earlier, with the present invention, it is possible also to use the mobile conductive heating means both for preheating and heating.

The cleaned and heated surface is then treated with suitable materials. The materials are chosen for a project depends on the specification; it is possible to passivate the steel surface, for example with a chromate or sulphate treatment. Various primers can alternatively or additionally be spread on the surface. They can be selected from compositions comprising
- liquid epoxy one component;
- liquid epoxy two components (base + hardener);
- powder epoxy spray;
- organosilicon materials alone; and
- organosilicon materials + passivation

After a pre-treatment/priming step, the adhesives and top-coats (e.g. the polymer coating layer) are applied.

Typical polymer coatings are based on polyolefins or other thermoplastic polymers. Exemplifying embodiments comprise polyethylene, polypropylene, adhesives in powder form or molten, SAPO (stand alone polyolefins, i.e. materials which can be used without separate adhesives). Also multilayer coatings are possible, where two or more layers are deposited on the surface simultaneously or consecutively.

In field, the operators (coaters) typically need the following equipments:
- a small extruder, preferably as simple and light as possible, for producing a melt polymer;
- preferably two cylinders for molten polymers (one in use, the other for filling);
- a blasting unit for cleaning of the field joint section;
- an air compressor for blasting or pneumatic piston movement;
- the above-described coating device, which is strapped to the pipe with preferably two chains or equivalent strapping means; an electrical power source for pipe heating and overlap area are preferably mounted to the die;
- a generator for electricity; and
- hydraulic system for the cylinder piston operation.

In operation, the FJ application area can be placed inside a tent.

As discussed above, the present invention can be used for coating different pipes. The pipe diameters can vary generally in the range from about 200 mm to 3500 mm. Typically in the particularly preferred embodiment, where the invention is used for coating field joints between polyolefin coated pipes, the diameters of the pipes are in the range of about 250 to 1500 mm.

It should still be pointed out that according to one embodiment, the relative motion between the carriage and the pipe can also be achieved by rotating the pipe which maintaining the carriage in stationary position. Such an embodiment can be applied for example indoors, in factories.

According to one particular embodiment, an inductive heater (nominal effect 40 kW) is used for preheating and heating of a polyolefin-coated steel pipe having a diameter of 508 mm and a thickness of 10 mm. The preheating was carried out with an effect of 5 to 10 %, i.e. about 2 to 4 kW to heat the steel to a temperature of 60 °C before application of primer (EP). The actual coating with polyethylene was carried out with an effect of 35 to 40 % of the output effect of the heater to increase the temperature to about 200 °C.

It should be noted that with the use of conventional stationary conductive heaters, the energy consumption is merely 15 to 20 % with the present localized heater.

## Claims

1. A method of coating a pipe (2; 30) or a pipe section with a layer of at least one polymer, comprising the steps of
- providing a pipe (2; 30) or a pipe section having an outer surface defining the periphery of the pipe or pipe section;
- applying on the outer surface of the pipe or pipe section a layer of at least one polymer material in melt stage using a nozzle (3), which is mounted on a carriage (1, 15a, 15b; 36) capable of travelling along the periphery of the pipe (2) or pipe section; and
- moving the carriage (1, 15a, 15b; 36) along at least a part of the periphery during the application of the polymer material to form a layer covering at least a part of the surface of the pipe (2; 30) or pipe section,
said outer surface of the pipe or pipe section being locally heated by induction heating before the application of the polymer material onto said surface,
**characterized in that** said local heating is carried out using induction heating means mounted on the carriage in front of the nozzle (3).

2. The method according to claim 1, **characterized by** using a flat die (3) which is mounted on the carriage (1, 15a, 15b) and connected to a source (4) of melt polymer material.

3. The method according to claim 1 or 2, **characterized in that** the carriage (1, 15a, 15b; 36) is moved along a spiral-shaped path along the periphery of the pipe (2; 30) or pipe section to provide a polymer layer, where each following layer partially overlaps the proceeding layer.

4. The method according to any of claims 1 to 3, **characterized in that** the polymer material is formed into a polymer film having a breadth essentially corresponding to the pre-selected breadth of the coating layer.

5. The method according to any of claims 1 to 4, **characterized in that** the polymer material is levelled with a levelling means (5; 38), which applies a force generally perpendicular to the polymer material for smoothening the polymer layer against the outer surface of the pipe (2; 30) or pipe section.

6. The method according to claim 5 **characterized in that** the levelling means is mounted on the movable carriage (1, 15a, 15b; 36).

7. The method according to claim 6, **characterized in that** the polymer material is extruded from said flat die (3) at an essentially fixed extrusion rate, and the thickness of the film is controlled by adjusting the velocity of the travelling carriage (1, 15a, 15b).

8. The method according to any of the preceding claims, **characterized in that** the pipe (2; 30) or pipe section is coated with at least one thermoplastic polymer.

9. The method according to claim 8, **characterized in that** the thermoplastic polymer is selected from the group consisting of polyolefins, in particular polyethylene and polypropylene, including a stand-alone polyolefins, and substituted polyolefins.

10. The method according to any of the preceding claims, **characterized in that** the outer surface of the pipe (2; 30) or pipe section is heated immediately before the application of the melt polymer material.

11. The method according to any of the preceding claims, **characterized in that** the outer surface of the pipe (2; 30) or pipe section is heated to a temperature in the range of 80 to 300 °C before coating.

12. The method according to any of the preceding claims, **characterized in that** wherein the locally heated area extends at least essentially along the whole breadth of the polymer layer applied to the outer surface.

13. The method according to any of the preceding claims, **characterized in that** the locally heated area extends in the propagation direction of the carriage at least 1/ 72 parts, preferably at least 1/36 part of the total periphery of the pipe (2; 30) or pipe section.

14. The method according to any of the preceding claims, **characterized in that** the locally heated area extends over less than half the perimeter of the pipe or pipe section in the transversal direction of the central axis of the pipe.

15. A method of joining pipes, in particular polyolefin coated steel pipes, wherein
- the ends of two coated steel pipes are fitted against each other;
- the steel pipes are welded together to form a joint and
- the joint is coated with at least one layer of a material capable of sealing off the joint against air and moisture,
**characterized by** providing the joint with a coating by using a method according to any of claims 1 to 14.

16. An apparatus for coating of a pipe (2; 30) or pipe section having an outer surface defining the periphery of the pipe or pipe section, comprising
- a movable carriage (1, 15a, 15b; 36), which is capable of travelling around the periphery of the pipe (2; 30) or pipe section;
- a die (3) connected to a source (4; 32) of a polymer melt for forming a polymer film, said die being mounted on the movable carriage (1, 15a, 15b; 36); and
- a levelling means (5; 38) capable of levelling and smoothening the polymer film against the outer surface of the pipe (2; 30) or pipe section,
**characterized in that** the carriage further exhibits induction heating means placed in front of the die in the propagation direction of the carriage.

17. The apparatus according to claim 16, **characterized in that** the carriage (1, 15a, 15b; 36) is capable of travelling at least 360 degrees along the periphery of the pipe (2; 30) or pipe section for providing a polymer layer covering the outer surface along the periphery.

18. The apparatus according to claim 16 or 17, **characterized in that** the die comprises a flat die (3) capable of forming the polymer material into a polymer film having a breadth essentially corresponding to the pre-selected breadth of the coating layer.

19. The apparatus according to any of claims 16 to 18, **characterized in that** the heating means are capable of heating an area of the outer surface at least extending over the whole breadth of the polymer film.

20. The apparatus according to any of claims 16 to 19, **characterized in that** the heating means are capable of locally heating an area extending in the propagation direction of the carriage at least 1/ 72 part, preferably at least 1/36 part of the total periphery of the pipe (2; 30) or pipe section.

## Patentansprüche

1. Verfahren zum Beschichten eines Rohrs (2; 30) oder eines Rohrabschnitts mit einer Schicht aus mindestens einem Polymer, umfassend die Schritte:
- Bereitstellen eines Rohrs (2; 30) oder eines Rohrabschnitts mit einer die Peripherie des Rohrs oder Rohrabschnitts definierenden Außenfläche;
- Aufbringen einer Schicht aus mindestens einem Polymermaterial in geschmolzenem Zustand unter Verwendung einer Düse (3), die auf einem Schlitten (1, 15a, 15b; 36) angebracht ist, der in der Lage ist, an der Peripherie des Rohrs (2; 30) oder Rohrabschnitts entlang zu fahren, auf die Außenfläche des Rohrs oder Rohrabschnitts; und
- Bewegen des Schlittens (1, 15a, 15b; 36) entlang zumindest eines Teils der Peripherie während des Aufbringens des Polymermaterials zum Bilden einer Schicht, die zumindest einen Teil der Oberfläche des Rohrs (2; 30) oder Rohrabschnitts bedeckt,
wobei die Außenfläche des Rohrs oder Rohrabschnitts durch Induktionsheizen vor dem Aufbringen des Polymermaterials auf die Oberfläche lokal erwärmt wird,
**dadurch gekennzeichnet, dass** das lokale Erwärmen unter Verwendung eines auf dem Schlitten vor der Düse (3) angebrachten Induktionsheizmittels durchgeführt wird.

2. Verfahren nach Anspruch 1, **gekennzeichnet durch** die Verwendung eines flachen Düsenkopfs (3), der auf dem Schlitten (1, 15a, 15b; 36) angebracht und mit einer Quelle (4) für geschmolzenes Polymermaterial verbunden ist.

3. Verfahren nach Anspruch 1 oder 2, **dadurch gekennzeichnet, dass** der Schlitten (1, 15a, 15b; 36) zum Bereitstellen einer Polymerschicht entlang eines spiralförmigen Wegs entlang der Peripherie des Rohrs (2; 30) oder Rohrabschnitts bewegt wird, wobei jede folgende Schicht die vorherige Schicht teilweise überdeckt.

4. Verfahren nach einem der Ansprüche 1 bis 3, **dadurch gekennzeichnet, dass** das Polymermaterial zu einem Polymerfilm mit einer der vorher ausgewählten Breite der Beschichtungsschicht entsprechenden Breite geformt wird.

5. Verfahren nach einem der Ansprüche 1 bis 4, **dadurch gekennzeichnet, dass** das Polymermaterial mit einem Nivellierungsmittel (5; 38) nivelliert wird, das eine zum Polymermaterial im Allgemeinen senkrechte Kraft ausübt, um die Polymerschicht an der Außenfläche des Rohrs (2; 30) oder Rohrabschnitts zu glätten.

6. Verfahren nach Anspruch 5, **dadurch gekennzeichnet, dass** das Nivellierungsmittel auf dem beweglichen Schlitten (1, 15a, 15b; 36) angebracht ist.

7. Verfahren nach Anspruch 6, **dadurch gekennzeichnet, dass** das Polymermaterial mit im Wesentlichen festgesetzter Extrusionsgeschwindigkeit aus dem flachen Düsenkopf (3) extrudiert und die Dicke des Films durch Einstellen der Geschwindigkeit des fahrenden Schlittens (1, 15a, 15b; 36) gesteuert wird.

8. Verfahren nach einem der vorangehenden Ansprüche, **dadurch gekennzeichnet, dass** das Rohr (2; 30) oder der Rohrabschnitt mit mindestens einem thermoplastischen Polymer beschichtet wird.

9. Verfahren nach Anspruch 8, **dadurch gekennzeichnet, dass** das thermoplastische Polymer ausgewählt ist aus der Gruppe, bestehend aus Polyolefinen, insbesondere Polyethylen und Polypropylen, einschließlich eigenständigen Polyolefinen und substituierten Polyolefinen.

10. Verfahren nach einem der vorangehenden Ansprüche, **dadurch gekennzeichnet, dass** die Außenfläche des Rohrs (2; 30) oder Rohrabschnitts direkt vor dem Aufbringen des geschmolzenen Polymermaterials erwärmt wird.

11. Verfahren nach einem der vorangehenden Ansprüche, **dadurch gekennzeichnet, dass** die Außenfläche des Rohrs (2; 30) oder Rohrabschnitts vor dem Beschichten auf eine Temperatur im Bereich von 80 bis 300°C erwärmt wird.

12. Verfahren nach einem der vorangehenden Ansprüche, **dadurch gekennzeichnet, dass** sich der lokal erwärmte Bereich zumindest im Wesentlichen entlang der gesamten Breite der auf die Außenfläche aufgebrachten Polymerschicht erstreckt.

13. Verfahren nach einem der vorangehenden Ansprüche, **dadurch gekennzeichnet, dass** sich der lokal erwärmte Bereich in die Laufrichtung des Schlittens über mindestens 1/72 Teil, vorzugsweise mindestens 1/36 Teil der gesamten Peripherie des Rohrs (2; 30) oder Rohrabschnitts erstreckt.

14. Verfahren nach einem der vorangehenden Ansprüche, **dadurch gekennzeichnet, dass** sich der lokal erwärmte Bereich über weniger als die Hälfte des Umfangs des Rohrs oder Rohrabschnitts in der Querrichtung der Mittelachse des Rohrs erstreckt.

15. Verfahren zum Verbinden von Rohren, insbesondere mit Polyolefin beschichteten Stahlrohren, wobei
- die Enden von zwei beschichteten Stahlrohren aneinander angepasst werden,
- die Stahlrohre unter Bildung einer Verbindungsstelle miteinander verschweißt werden und
- die Verbindungsstelle mit mindestens einer Schicht aus einem Material, das in der Lage ist, die Verbindungsstelle vor Luft und Feuchtigkeit abzudichten, beschichtet wird,
**dadurch gekennzeichnet, dass** die Verbindungsstelle mit einer Beschichtung unter Verwendung eines Verfahrens nach einem der Ansprüche 1 bis 14 versehen wird.

16. Apparatur zum Beschichten eines Rohrs (2; 30) oder Rohrabschnitts mit einer die Peripherie des Rohrs oder Rohrabschnitts definierenden Außenfläche, umfassend
- einen beweglichen Schlitten (1, 15a, 15b; 36), der in der Lage ist, um die Peripherie des Rohrs (2; 30) oder Rohrabschnitts zu fahren;
- einen Düsenkopf (3), der mit einer Quelle (4; 32) für eine Polymerschmelze zum Bilden eines Polymerfilms verbunden ist, wobei der Düsenkopf auf dem beweglichen Schlitten (1, 15a, 15b; 36) angebracht ist; und
- ein Nivellierungsmittel (5; 38), das in der Lage ist den Polymerfilm an der Außenfläche des Rohrs (2; 30) oder Rohrabschnitts zu glätten,
**dadurch gekennzeichnet, dass** der Schlitten des Weiteren ein Induktionsheizmittel aufweist, das sich vor dem Düsenkopf in Laufrichtung des Schlittens befindet.

17. Apparatur nach Anspruch 16, **dadurch gekennzeichnet, dass** der Schlitten (1, 15a, 15b; 36) in der Lage ist mit mindestens 360 Grad entlang der Peripherie des Rohrs (2; 30) oder Rohrabschnitts zu fahren, um eine Polymerschicht bereitzustellen, die die Außenfläche entlang der Peripherie bedeckt.

18. Apparatur nach Anspruch 16 oder 17, **dadurch gekennzeichnet, dass** der Düsenkopf einen flachen Düsenkopf (3) umfasst, der in der Lage ist, das Polymermaterial zu einem Polymerfilm mit einer im Wesentlichen der vorher ausgewählten Breite der Beschichtungsschicht entsprechenden Breite zu formen.

19. Apparatur nach einem der Ansprüche 16 bis 18, **dadurch gekennzeichnet, dass** das Heizmittel in der Lage ist, einen Bereich der Außenfläche, die sich zumindest über die gesamte Breite des Polymerfilms erstreckt, zu erwärmen.

20. Apparatur nach einem der Ansprüche 16 bis 19, **dadurch gekennzeichnet, dass** das Heizmittel in der Lage ist, einen Bereich, der sich in Laufrichtung des Schlittens über mindestens 1/72 Teil, vorzugsweise mindestens 1/36 Teil der gesamten Peripherie des Rohrs (2; 30) oder Rohrabschnitts erstreckt, zu erwärmen.

## Revendications

1. Procédé de revêtement d'un tuyau (2 ; 30) ou d'une section de tuyau avec une couche d'au moins un polymère, comprenant les étapes qui consistent
à fournir un tuyau (2 ; 30) ou une section de tuyau ayant une surface extérieure définissant la périphérie du tuyau ou de la section de tuyau ;
à appliquer sur la surface extérieure du tuyau ou de la section de tuyau une couche d'au moins un matériau polymère à l'état fondu en utilisant une buse (3), qui est montée sur un chariot (1, 15a, 15b ; 36) capable de se déplacer le long de la périphérie du tuyau (2) ou de la section de tuyau ; et
à déplacer le chariot (1, 15a, 15b ; 36) le long d'au moins une partie de la périphérie au cours de l'application du matériau polymère afin de former une couche recouvrant au moins une partie de la surface du tuyau (2 ; 30) ou de la section de tuyau,
ladite surface extérieure du tuyau ou de la section de tuyau étant chauffée localement par le biais d'un chauffage par induction avant l'application du matériau polymère sur ladite surface,
**caractérisé en ce que** ledit chauffage local est réalisé en utilisant un moyen de chauffage par induction monté sur le chariot face à la buse (3).

2. Procédé selon la revendication 1, **caractérisé par** le fait d'utiliser une filière plate (3) qui est montée sur le chariot (1, 15a, 15b) et reliée à une source (4) de matériau polymère fondu.

3. Procédé selon la revendication 1 ou 2, **caractérisé en ce que** le chariot (1, 15a, 15b ; 36) est déplacé le long d'un trajet en forme de spirale le long de la périphérie du tuyau (2 ; 30) ou de la section de tuyau afin de fournir une couche de polymère, où chaque couche suivante recouvre partiellement la couche précédente.

4. Procédé selon l'une des revendications 1 à 3, **caractérisé en ce que** le matériau polymère est formé dans un film polymère ayant une largeur correspondant essentiellement à la largeur préalablement choisie de la couche de revêtement.

5. Procédé selon l'une des revendications 1 à 4, **caractérisé en ce que** le matériau polymère est nivelé avec un moyen de nivellement (5 ; 38), qui applique une force globalement perpendiculaire au matériau polymère pour lisser la couche de polymère sur la surface extérieure du tuyau (2 ; 30) ou de la section de tuyau.

6. Procédé selon la revendication 5, **caractérisé en ce que** le moyen de nivellement est monté sur le chariot mobile (1, 15a, 15b ; 36).

7. Procédé selon la revendication 6, **caractérisé en ce que** le matériau polymère est extrudé à partir de ladite filière plate (3) à une vitesse d'extrusion essentiellement fixe, et l'épaisseur du film est réglée en ajustant la vitesse du chariot de déplacement (1, 15a, 15b).

8. Procédé selon l'une des revendications précédentes, **caractérisé en ce que** le tuyau (2 ; 30) ou la section de tuyau est revêtu(e) avec au moins un polymère thermoplastique.

9. Procédé selon la revendication 8, **caractérisé en ce que** le polymère thermoplastique est choisi dans le groupe constitué de polyoléfines, en particulier de polyéthylène et de polypropylène, comportant des polyoléfines isolées et des polyoléfines substituées.

10. Procédé selon l'une des revendications précédentes, **caractérisé en ce que** la surface extérieure du tuyau (2 ; 30) ou de la section de tuyau est chauffée immédiatement avant l'application du matériau polymère fondu.

11. Procédé selon l'une des revendications précédentes, **caractérisé en ce que** la surface extérieure du tuyau (2 ; 30) ou de la section de tuyau est chauffée à une température dans la plage allant de 80 à 300°C avant le revêtement.

12. Procédé selon l'une des revendications précédentes, **caractérisé en ce que** la zone localement chauffée s'étend essentiellement au moins le long de la largeur totale de la couche de polymère appliquée à la surface extérieure.

13. Procédé selon l'une des revendications précédentes, **caractérisé en ce que** la zone localement chauffée s'étend dans la direction de propagation du chariot sur au moins 1/72 partie, de préférence sur au moins 1/36 partie de la périphérie totale du tuyau (2; 30) ou de la section de tuyau.

14. Procédé selon l'une des revendications précédentes, **caractérisé en ce que** la zone localement chauffée s'étend sur moins de la moitié du périmètre du tuyau ou de la section de tuyau dans la direction transversale de l'axe central du tuyau.

15. Procédé destiné à joindre des tuyaux, en particulier des tuyaux en acier revêtus de polyoléfine, dans lequel
les extrémités de deux tuyaux en acier revêtus sont ajustées l'une contre l'autre ;
les tuyaux en acier sont soudés l'un à l'autre afin de former un joint et
le joint est revêtu avec au moins une couche d'un matériau capable d'isoler hermétiquement le joint de l'air et de l'humidité,
**caractérisé par** le fait de fournir au joint un revêtement en utilisant un procédé selon l'une des revendications 1 à 14.

16. Appareil pour le revêtement d'un tuyau (2 ; 30) ou d'une section de tuyau ayant une surface extérieure définissant la périphérie du tuyau ou de la section de tuyau, comprenant
un chariot mobile (1, 15a, 15b ; 36), qui est capable de se déplacer autour de la périphérie du tuyau (2 ; 30) ou de la section de tuyau ;
une filière (3) reliée à une source (4 ; 32) d'un polymère fondu afin de former un film polymère, ladite filière étant montée sur le chariot mobile (1, 15a, 15b ; 36) ; et
un moyen de nivellement (5 ; 38) capable de niveler et lisser le film polymère sur la surface extérieure du tuyau (2 ; 30) ou de la section de tuyau,
**caractérisé en ce que** le chariot présente en outre un moyen de chauffage par induction placé en face de la filière dans la direction de propagation du chariot.

17. Appareil selon la revendication 16, **caractérisé en ce que** le chariot (1, 15a, 15b ; 36) est capable de se déplacer au moins à 360 degrés le long de la périphérie du tuyau (2 ; 30) ou de la section de tuyau afin de fournir une couche de polymère recouvrant la surface extérieure le long de la périphérie.

18. Appareil selon la revendication 16 ou 17, **caractérisé en ce que** la filière comprend une filière plate (3) capable de former le matériau polymère dans un film polymère ayant une largeur correspondant essentiellement à la largeur choisie préalablement de la couche de revêtement.

19. Appareil selon l'une des revendications 16 à 18, **caractérisé en ce que** le moyen de chauffage est capable de chauffer une zone de la surface extérieure s'étendant au moins sur la largeur totale du film polymère.

20. Appareil selon l'une des revendications 16 à 19, **caractérisé en ce que** le moyen de chauffage est capable de chauffer localement une zone s'étendant dans la direction de propagation du chariot à au moins 1/72 partie, de préférence à au moins 1/36 partie de la périphérie totale du tuyau (2 ; 30) ou de la section de tuyau.
